# EUROPÄISCHE PATENTANMELDUNG

(11) **EP 1 294 126 A1**
(43) Veröffentlichungstag der Anmeldung: **19.03.2003**
(21) Anmeldenummer: 02020306.3
(22) Anmeldetag: 11.09.2002
(51) Int. Cl.: H04L 12/24, H04L 29/06, H04M 3/22, G06F 17/60

(54) **Verfahren zur Steuerung des Zugriffs auf ein Störungsmeldungssystem eines Kommunikationsnetzes, Störungsmeldungssystem und Computerprogramm**

(30) Priorität: 14.09.2001 DE 10145487
(71) Anmelder: SIEMENS AKTIENGESELLSCHAFT, 80333 München (DE)
(72) Erfinder: Görtz, Stefan, 44141 Dortmund (DE)

(57) **Zusammenfassung**

Zur Steuerung des Zugriffs auf ein Störungsmeldungssystem eines Kommunikationsnetzes werden Störungsmeldungen in einer Störungsmeldungsdatenbank des Kommunikationsnetzes gesammelt. Einer Störungsmeldung wird ein Störungsmeldungsidentifikator und ein Berechtigungsindikator eines Dienste im Kommunikationsnetz nutzenden Teilnehmers zugeordnet. Über den Störungsmeldungsidentifikator und den Berechtigungsindikator wird ein Störungsmeldungsdatensatz zum Abruf durch den Teilnehmer verfügbar gemacht.

## Beschreibung

Aus WO 00/02365 ist ein Verfahren bekannt, das einer mit einem portablen Rechner ausgestatteten Wartungsperson Zugriff auf in einem entfernten Kommunikationssystem gespeicherte Daten ermöglicht. Der Zugriff erfolgt über ein drahtloses Kommunikationssystem, dem ein drahtgebundenes Kommunikationssystem als Reservesystem zugeordnet ist. Eine Meldung zur Anforderung von Daten aus dem entfernten Kommunikationssystem wird über eine Systemschnittstelle an das entfernte Kommunikationssystem übermittelt. Anschließend erfolgt dort eine Verarbeitung der Meldung. Bei der Verarbeitung der Meldung wird überprüft, ob durch die Meldung Daten angefordert werden. Ist dies der Fall, so werden die angeforderten Daten an portablen Rechner übermittelt. Mit Hilfe des in WO 00/02365 beschriebenen Verfahrens kann die Wartungsperson Fehlerberichte und Arbeitsaufträge abrufen und bearbeiten. Allerdings stehen derartige Zugriffsmöglichkeiten nur für eine Wartungsperson zur Verfügung, nicht aber für einen Dienste nutzenden Teilnehmer bzw. Kunden.

Der vorliegenden Erfindung liegt die Aufgabe zugrunde, ein Verfahren zur Steuerung des Zugriffs auf ein Störungsmeldungssystem, ein dazu geeignetes Störungsmeldungssystem sowie ein Computerprogramm anzugeben, das einen Dienste im Kommunikationsnetz nutzenden Teilnehmer in die Lage versetzt, sich ohne fremde Hilfe über den Status seiner Störungsmeldung zu informieren.

Diese Aufgabe wird erfindungsgemäß durch ein Verfahren mit den in Anspruch 1, ein Störungsmeldungssystem mit den in Anspruch 9 und ein Computerprogramm mit den in Anspruch 10 angegebenen Merkmalen gelöst. Vorteilhafte Weiterbildungen des erfindungsgemäßen Verfahrens sind den abhängigen Ansprüchen zu entnehmen.

Ein wesentlicher Aspekt der vorliegenden Erfindung besteht darin, daß durch eine Zuordnung eines Störungsmeldungsidentifikators und eines Berechtigungsindikators zu einer Störungsmeldung eine Vorraussetzung für einen Abruf von störungsmeldungsbezogenen Informationen durch einen von der Störung betroffenen Teilnehmer geschaffen wird. Über den Störungsmeldungsidentifikator und den Berechtigungsindikator als Zugriffsberechtigungsnachweisen wird ein Störungsmeldungsdatensatz zum Abruf verfügbar gemacht.

Die vorliegende Erfindung wird nachfolgend an einem Ausführungsbeispiel anhand der Zeichnung verdeutlich. Es zeigt
- Figur 1: ein Korimunikationsnetz mit einem Störungsmeldungssystem und
- Figur 2: eine Benutzerschnittstelleneinrichtung an einem Teilnehmerendgerät.

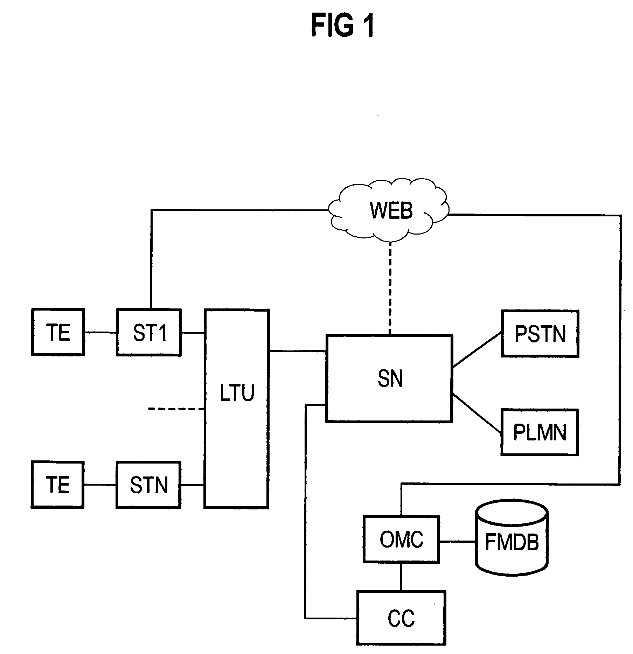

Das in Fig. 1 dargestellte Kommunikationsnetz weist ein Koppelnetz SN, eine Anschlußeinheit LTU, eine Zentralsteuerungseinrichtung CC und eine Betriebs- und Wartungseinrichtung OMC auf. Die Anschlußeinheit LTU verbindet das Koppelnetz SN mit Teilnehmeranschlüssen ST1 bis STn, an denen Teilnehmerendgeräte TE angeschlossen sind. Das Koppelnetz SN nimmt zentrale Vermittlungsfunktionen für Kommunikationsverbindungen zwischen den einzelnen Teilnehmeranschlüssen ST1 bis STn untereinander und zu einem öffentlichen Funktelefonfestnetz PSTN und einem öffentlichen Mobilfunknetz PLMN war. Die Steuerung des Koppelnetzes SN erfolgt durch die Zentralsteuerungseinrichtung CC. In einer der Betriebs- und Wartungseinrichtung OMC zugeordneten Datenbank FMDB, werden Störungsmeldungen gesammelt und in Form von Störungsmeldungsdatensätzen gespeichert. Die Störungsmeldungsdatensätze umfassen folgende Attribute:
- Kundennummer eines von einer Störung betroffenen Teilnehmers,
- Anschlußnummer eines von einer Störung betroffenen Teilnehmers,
- Störungsart,
- Störungsdatum,
- Störungsbeschreibung,
- für eine Störungsbehebung zuständiger Kundendienstmitarbeiter,
- Statuscode für den aktuellen Zustand der Störungsbehandlung.

Desweiteren wird jeder Störungsmeldung ein Störungsmeldungsidentifikator und ein Berechtigungsindikator eines Dienste im Kommunikationsnetz nutzenden Teilnehmers zugeordnet. Der Berechtigungsindikator ist beispielsweise ein privater Schlüssel eines asymmetrischen Verschlüsselungssystems, der dem von der Störung betroffenen Teilnehmer zugeordnet ist, oder ein Paßwort. Alternativ dazu besteht die Möglichkeit, als Berechtigungsindikator eine von dem von der Störung betroffenen Teilnehmeranschluß aus übermittelte Teilnehmerrufnummer zu verwenden und diese darauf zu überprüfen, ob sie dem Teilnehmeranschluß zugeordnet ist, von dem aus sie übermittelt wurde.

Der Störungsmeldungsdatensatz wird über ein Internetportal für den von der Störung betroffenen Teilnehmer zum Abruf verfügbar gemacht. Hierzu werden der Teilnehmeranschluß ST1 bis STn und die Betriebs- und Wartungseinrichtung OMC der die Störungsmeldungsdatenbank FMDB zugeordnet ist, mit einem Zugang zum Internet WEB versehen. Zum Abruf eines Störungsmeldungsdatensatzes loggt sich der von einer Störung betroffene Teilnehmer am Internetportal unter Verwendung des Störungsmeldungsidentifikators und seines Berechtigungsindikators ein. Nach Überprüfung des Störungsmeldungsidentifikators und des Berechtigungsindikators werden dem Teilnehmer an einer Bildschirmeinrichtung eines ihm zugeordneten Teilnehmerendgeräts TE für ihn zum Lesen freigegebene Attribute des Störungsmeldungsdatensatzes angezeigt. Ein Ausfiltern durch den Teilnehmer abrufbarer Attribute des Störungsmeldungsdatensatzes erfolgt anhand des Berechtigungsindikators. Des weiteren sind einer Störungsmeldung ein Störungsmeldungsidentifikator und ein Berechtigungsindikator eindeutig zugeordnet, so daß über den Störungsmeldungsidentifikator und den Berechtigungsindikator Attribute genau eines Störungsmeldungsdatensatzes zum Abruf durch den von einer Störung betroffenen Teilnehmer verfügbar sind.

In Fig. 2 ist ein von einem Teilnehmeranschluß ST1 bis STn angeschlossenes Teilnehmerendgerät TE dargestellt. Auf einen Bildschirm 201, eine Systemeinheit 202 und eine Tastatur 303 aufweist. Ein auf der Systemeinheit 202 installiertes Betriebssystem weist eine grafische Benutzeroberfläche 204 auf, bei der für auf der Systemeinheit 202 ablaufende Programmanwendungen jeweils zumindest ein Anwendungsfenster 205 bereitgestellt wird. Eine solche Programmanwendung ist beispielsweise ein an sich bekannter Internetbrowser mit dem auf einem Server gespeicherte Text- bzw. Grafikinformationen sichtbar gemacht werden können. Solche Text- bzw. Grafikinformationen, die üblicherweise entsprechend der Hypertext-Markierungssprache formatiert sind, werden zur Darstellung abrufbarer Attribute eines Störungsmeldungsdatensatzes benutzt.

Das Anwendungsfenster 205 gliedert sich in eine Titelleiste 206 mit einer Bezeichnung der jeweiligen Programmanwendung, eine Adressleiste 207 und einen Datenbereich 208. Im Datenbereich 208 sind Meldungstexte 209 wiedergegeben, die dem aktuellen Zustand der Störungsbehandlung repräsentieren. Die Meldungstexte 209 sind dabei als Beschriftungen eines Zustandsgrafen ausgeführt, aus dem Zustandsänderungen bzw. Zustandsübergänge hervorgehen. Durch einen Statusindikatortext 210 mit einer zugeordneten grafischen Markierung in Form eines Pfeils wird der für den jeweils aktuellen Zustand gültige Meldungstext 209 gekennzeichnet. Für einen von einer Störung betroffenen Teilnehmer ist somit eine leichte Interpretierbarkeit der jeweiligen Meldungstexte 209 gewährleistet, wobei die Meldungstexte 209 im wesentlichen verbale Ausformulierungen eines Statuscodes darstellen.

Am unteren Rand des Anwendungsfensters 205 befindet sich eine Statusleiste 211. In der Statusleiste 211 fährt der jeweilige Störungsmeldungsidentifikator und ein Überprüfungsergebnis im Bezug auf den Berechtigungsindikator dargestellt.

Das vorangehend beschriebene Verfahren zur Steuerung des Zugriffs auf ein Störungsmeldungssystem ist durch ein Computerprogramm implementiert, das in einem Arbeitsspeicher einer der Betriebs- und Wartungseinrichtung OMC zugeordneten, in Fig. 2 nicht explizit dargestellten Datenverarbeitungsanlage, ladbar ist und Softwarecodeabschnitte aufweist, bei deren Ausführung die vorangehend beschriebenen Verfahrensschritte ausgeführt werden, wenn das Computerprogramm in der Datenverarbeitungsanlage abläuft.

Die Anwendung der vorliegenden Erfindung ist nicht auf das hier beschriebene Ausführungsbeispiel beschränkt.

## Patentansprüche

1. Verfahren zur Steuerung des Zugriffs auf ein Störungsmeldungssystem eines Kommunikationsnetzes, bei dem
- Störungsmeldungen in einer Störungsmeldungsdatenbank (FMDB) des Kommunikationsnetzes gesammelt werden,
- einer Störungsmeldung ein Störungsmeldungsidentifikator und ein Berechtigungsindikator eines Dienste im Kommunikationsnetz nutzenden Teilnehmers zugeordnet wird,
- über den Störungsmeldungsidentifikator und den Berechtigungsindikator ein Störungsmeldungsdatensatz zum Abruf durch den Teilnehmer verfügbar gemacht wird.

2. Verfahren nach Anspruch 1,
bei dem einer Störungsmeldung ein Störungsmeldungsidentifikator und ein Berechtigungsindikator eindeutig zugeordnet wird und über den Störungsmeldungsidentifikator und den Berechtigungsindikator genau ein Störungsmeldungsdatensatz zum Abruf verfügbar gemacht wird.

3. Verfahren nach einem der Ansprüche 1 oder 2,
bei dem der Berechtigungsindikator ein privater Schlüssel eines asymmetrischen Verschlüsselungssystems ist.

4. Verfahren nach einem der Ansprüche 1 oder 2,
bei dem der Berechtigungsindikator ein Paßwort ist.

5. Verfahren nach einem der Ansprüche 1 oder 2,
bei dem der Berechtigungsindikator eine von einem Teilnehmeranschluß (ST1-STn) aus übermittelte Teilnehmerrufnummer ist, und bei dem die Teilnehmerrufnummer überprüft wird, ob sie dem Teilnehmeranschluß zugeordnet ist, von dem aus sie übermittelt wurde.

6. Verfahren nach einem der Anschlüsse 1 bis 5,
bei dem die Störungsmeldungsdatenbank (FMDB) einer Betriebs- und Wartungseinrichtung (OMC) zugeordnet ist.

7. Verfahren nach einem der Ansprüche 1 bis 6,
bei dem ein Störungsmeldungsdatensatz an einem Internet-Portal zum Abruf verfügbar gemacht wird.

8. Verfahren nach einem der Ansprüche 1 bis 7,
bei dem anhand des Berechtigungsindikators durch den Teilnehmer abrufbare Attribute des Störungsmeldungsdatensatzes ausgefiltert werden

9. Störungsmeldungssystem für ein Kommunikationsnetz mit
- einer Störungsmeldungsdatenbank (FMDB) zur Sammlung von Störungsmeldungen,
- zumindest einem Mittel (OMC) zur Zuordnung eines Störungsmeldungsidentifikators und eines Berechtigungsindikators eines Dienste im Kommunikationsnetz nutzenden Teilnehmers zu einer Störungsmeldung,
- zumindest einem Mittel (OMC) zur Bereitstellung eines Störungsmeldungsdatensatzes zum Abruf durch den Teilnehmer über den Störungsmeldungsidentifikator und den Berechtigungsindikator.

10. Computerprogramm, das in einen Arbeitsspeicher einer Datenverarbeitungsanlage ladbar ist und zumindest einen Software-Codeabschnitt aufweist, bei dessen Ausführung
- einer Störungsmeldung ein Störungsmeldungsidentifikator und ein Berechtigungsindikator eines Dienste im Kommunikationsnetz nutzenden Teilnehmers zugeordnet wird,
- über den Störungsmeldungsidentifikator und den Berechtigungsindikator ein Störungsmeldungsdatensatz zum Abruf durch den Teilnehmer verfügbar gemacht wird,
wenn das Computerprogramm in der Datenverarbeitungsanlage abläuft.
